# EUROPÄISCHE PATENTSCHRIFT

(11) **EP 2 833 034 B1**
(45) Veröffentlichungstag und Bekanntmachung des Hinweises auf die Patenterteilung: **30.05.2018**
(21) Anmeldenummer: 14173476.4
(22) Anmeldetag: 23.06.2014
(51) Int. Cl.: F16K 7/12, F16K 7/14

(54) **Membrananordnung für eine Ventileinrichtung**
Membrane assembly for a valve device
Système de membrane pour un dispositif de soupape

(30) Priorität: 02.08.2013 DE 102013215294
(43) Veröffentlichungstag der Anmeldung: 04.02.2015
(73) Patentinhaber: Gemü Gebr. Müller Apparatebau GmbH & Co. Kommanditgesellschaft, 74653 Ingelfingen (DE)
(72) Erfinder: Frankenbach, Klaus, 74670 Forchtenberg-Schleierhof (DE)
(74) Vertreter: DREISS Patentanwälte PartG mbB

(56) Entgegenhaltungen:
- EP-A2- 1 138 989
- DE-A1- 3 248 368
- DE-A1- 10 216 661
- DE-A1- 10 354 177
- DE-B3-102008 031 652

## Beschreibung

Die Erfindung betrifft eine Ventileinrichtung nach dem Oberbegriff des Anspruchs 1.

Ventile mit Membranen, die zwischen einem Antriebsteil und medienführenden Bereichen des Ventils angeordnet sind, sind allgemein bekannt.

Die DE 35 46 117 C1 betrifft eine zweischichtige Membran für ein Membranventil. Die Membran besteht aus zwei im Wesentlichen gleich dicken PTFE-Schichten, welche durch eine dünne Zwischenschicht aus einem Schnellstkleber, vorzugsweise aus einem PFA-Kunststoff, fest miteinander verbunden sind.

Die DE 10 2008 031 652 B3 betrifft ein Membranventil mit einer Membrandichtung, bei dem ein Stützmittel zusätzlich zu Stützelementen ein Kontaktmittel umfasst, und wobei zwischen dem Kontaktmittel und der Membrandichtung zusätzlich eine Stützmembran angeordnet ist. Die Stützmembran liegt an der Membrandichtung mindestens in einem Bereich eines umlaufenden Endes eng an. Die Stützmembran ist sandwichartig zu den Ringelementen und einer Membrandichtung angeordnet.

Die EP 1 128 989 A2 offenbart eine oberflächenseitige Membran und eine hinterseitige Membran, die miteinander verklebt sind.

Die DE 32 48 368 A1 offenbart eine Absperrmembran, die aus einer Dichtmembran und einer Trägermembran besteht. Die Trägermembran selbst stützt die Dichtmembran ab. Die beiden Membranen sind aber im Übrigen nicht miteinander verbunden. In die Trägermembran eingebettet ist ein Gewindestift mit einem Bund, der zur Kraftübertragung zwischen der Absperrmembran und einem Antriebselement dient.

Die DE 102 16 661 A1 offenbart eine Verbundmembran, bei der eine Deckschicht ein Sinterformteil ist und auf eine Trägerschicht aufvulkanisiert ist. Die Deckschicht und die Trägerschicht sind nicht vollständig miteinander verbunden, sondern es ist die Deckschicht lediglich in einem begrenzten Flächenbereich, dessen Durchmesser kleiner als der Wirkdurchmesser der Membran ist, auf die Trägerschicht aufvulkanisiert. In einem Material der Trägerschicht ist ein Schraubenbolzen teilweise eingebettet. Mit dem Schraubenbolzen lässt sich die Verbundmembran an einen Betätigungsstempel des Membranventils befestigen.

Das der Erfindung zugrunde liegende Problem wird durch eine Ventileinrichtung nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Dadurch, dass zwei Membranelemente derart in einem Anlageabschnitt aneinander anliegen, dass in dem Anlageabschnitt das erste Membranelement und das zweite Membranelement zueinander bewegbar sind, wird vorteilhaft erreicht, dass insbesondere in dem Anlageabschnitt die Wandstärke insgesamt erhöht werden kann, wobei gleichzeitig sich die Walkkräfte nicht wesentlich erhöhen. Dadurch wird vorteilhaft erreicht, dass sowohl hohe Drücke als auch hohe Temperaturen auf den Anlageabschnitt einwirken können, wobei gleichzeitig eine geringere Kraft aufgewendet werden muss, um die Membrananordnung im Bereich des Anlageabschnitts zu bewegen. Zusätzlich erhöht sich auch die Sicherheit der Ventileinrichtung, da selbst bei einer Zerstörung einer der Membranelemente das andere Membranelement für eine Abdichtung der Ventileinrichtung sorgt. Zusätzlich reduzieren sich die Spannungen auf die einzelnen Membranelemente deutlich im Vergleich zu einer Ausführung als einteilige Membrananordnung mit gleicher Dicke, womit sich die Lebensdauer der Membrananordnung und damit der gesamten Ventileinrichtung deutlich erhöht.

In einer vorteilhaften Ausführungsform weist das erste Membranelement und das zweite Membranelement im Bereich des Anlageabschnitts, insbesondere in einem nicht kraftbeaufschlagten Zustand, abschnittsweise im Querschnitt jeweils eine Wölbung auf. Die Wölbungen sind zueinander im Wesentlichen gleichförmig ausgeführt. Durch die Wölbungen wird vorteilhaft das gegenseitige Anliegen der Membranelemente verbessert. Bei der Bewegung in eine z-Richtung bleibt die Wölbung über große Teile des Bewegungsbereichs erhalten, wodurch ebenfalls ein Ablösen der beiden Membranelemente voneinander verhindert wird.

Erfindungsgemäß werden die Membranelemente derart ausgebildet, dass die beiden Membranelemente in einem ersten Festlegungsabschnitt und in einem zweiten Festlegungsabschnitt zueinander festlegbar sind. Der Anlageabschnitt befindet sich zwischen dem ersten Festlegungsabschnitt und dem zweiten Festlegungsabschnitt. Damit können die Oberflächen des ersten Membranelements und des zweiten Membranelements im Bereich des Anlageabschnitts sich aneinander vorbeibewegen, wodurch eine Lösung geschaffen wird, bei der in dem Anlageabschnitt sich eine flexiblere Lösung ergibt als bei einer gleich dicken einteiligen Membrananordnung.

In einer weiteren vorteilhaften Ausführungsform umfasst das erste Membranelement einen Verschlussbereich, der dazu ausgebildet ist, um mit einem Ventilsitzbereich der Ventileinrichtung zusammenzuwirken. Das erste Membranelement ist einteilig mit dem Verschlussbereich ausgeführt. Dadurch reduzieren sich vorteilhaft die medienberührten Bereiche einer Ventileinrichtung. Die Einsparung von Kanten und Übergangsbereichen in den medienberührten Abschnitten einer Ventileinrichtung ermöglicht vorteilhaft einen breiten Einsatzbereich. Insbesondere lassen sich dadurch vorteilhaft Kontaminationen reduzieren.

In einer vorteilhaften Weiterbildung ist der Verschlussbereich mittels eines Zwischenbereichs von dem Anlageabschnitt beabstandet. Dies ermöglicht eine flexible Anordnung der Membrananordnung bezüglich der Befestigung der Membrananordnung in der Ventileinrichtung. Des Weiteren ergeben sich Vorteile bezüglich der Anordnung des Ventilsitzes. Darüber hinaus lässt sich durch diese Anordnung ein größerer Hub realisieren. Weitere Vorteile ergeben sich bezüglich eines reduzierten Totraumes.

Erfindungsgemäß weist das zweite Membranelement einen Durchgang zur Durchführung einer Antriebsstange auf. Das erste Membranelement weist eine Ausnehmung zur Aufnahme der Antriebsstange auf. Dadurch kann die Antriebsstange in der Ausnehmung des ersten Membranelements festgelegt werden, wobei die Antriebsstange von dem ersten Membranelement umschlossen ist und damit nicht im medienberührten Teil der Ventileinrichtung bewegt wird.

In einer weiteren vorteilhaften Ausführungsform ist das zweite Membranelement derart ausgebildet und/oder angeordnet, um zu einer nicht medienführenden Seite der Membrananordnung in der Ventileinrichtung hin angeordnet zu sein. Dadurch ergibt sich vorteilhaft eine Reduktion der Kanten und Übergänge im medienführenden Teil der Ventileinrichtung.

In einer weiteren vorteilhaften Ausführungsform der Membrananordnung sind das erste Membranelement und das zweite Membranelement aus PTFE oder enthalten zumindest zu einem Teil PTFE. Dadurch ergeben sich vorteilhaft geringe Reibkräfte im Bereich des Anlageabschnitts, wodurch sich die Walkkräfte weiter verringern.

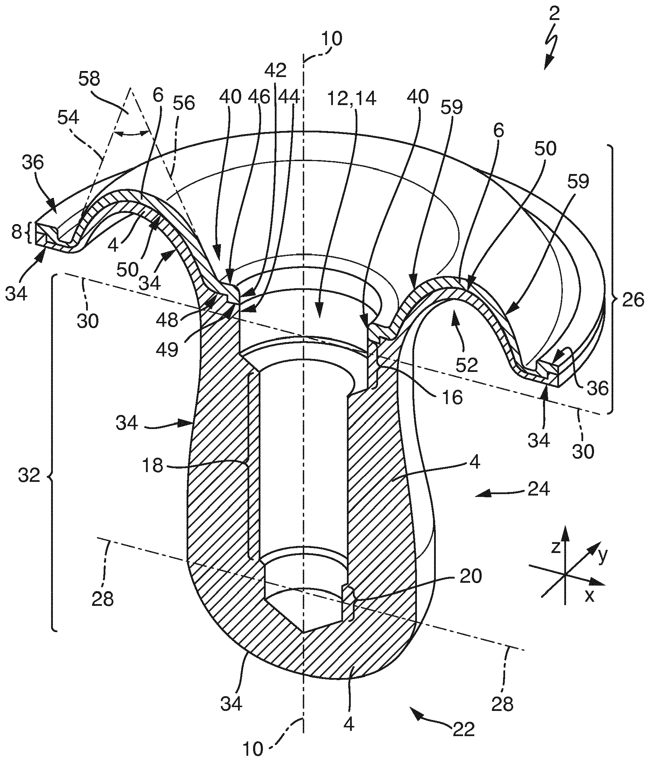

Weitere Merkmale, Anwendungsmöglichkeiten und Vorteile der Erfindung ergeben sich aus der nachfolgenden Beschreibung von Ausführungsbeispielen der Erfindung, die in der Figur der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung oder Darstellung in der Beschreibung oder in der Zeichnung.

Nachfolgend werden beispielhafte Ausführungsformen der Erfindung unter Bezugnahme auf die einzige Figur der Zeichnung erläutert.

Die Figur der Zeichnung zeigt eine Membrananordnung 2. Die Membrananordnung 2 umfasst ein erstes Membranelement 4 und ein zweites Membranelement 6. Die gezeigte Membrananordnung 2 ist zur Anordnung in einer nicht gezeigten Ventileinrichtung ausgebildet. Die Ventileinrichtung dient zur Absperrung oder Regelung eines Durchflusses von strömenden Fluiden.

Innerhalb der Ventileinrichtung dient die Membrananordnung 2 unter anderem zur Trennung eines medienführenden Bereichs und eines nicht medienführenden Bereichs der Ventileinrichtung. Des Weiteren ist die Membrananordnung 2 in einem ersten Befestigungsbereich 8 fest mit der Ventileinrichtung verbunden. Die Membrananordnung 2 ist im Wesentlichen rotationssymmetrisch um eine Achse 10 ausgebildet, die im Wesentlichen parallel zu einer z-Achse ausgebildet ist. Das zweite Membranelement 6 weist einen Durchgang 12 auf, der zur Durchführung einer Antriebsstange ausgebildet ist. Das erste Membranelement 4 weist eine Ausnehmung 14 auf, die zur Aufnahme der Antriebsstange ausgebildet ist. Die nicht gezeigte Antriebsstange wird derart mit dem ersten Membranelement 4 verbunden, dass mittels der Antriebsstange das erste Membranelement 4 in eine z-Richtung bewegt werden kann. Die Antriebsstange ist in einem Bereich 16, 18 oder 20 beispielsweise durch ein Innengewinde der Ausnehmung 14 und ein in das Innengewinde eingreifende Außengewinde der Antriebsstange mit dem ersten Membranelement 4 verbunden.

Durch eine Bewegung in eine z-Richtung mittels der Antriebsstange wird ein Verschlussbereich 22 auf einen Ventilsitzbereich der Ventileinrichtung zubewegt bzw. von dem Ventilsitzbereich der Ventileinrichtung weg bewegt. Das erste Membranelement 4 umfasst somit den Verschlussbereich 22, der dazu ausgebildet ist, um mit dem Ventilsitzbereich der Ventileinrichtung zusammenzuwirken. Die Ventileinrichtung kann damit in einem geschlossenen oder in einem geöffneten Zustand betrieben werden. Das erste Membranelement 4 ist damit einteilig mit dem Verschlussbereich 22 ausgeführt. Der Verschlussbereich 22 ist des Weiteren mittels eines Zwischenbereichs 24 von einem Membranbereich 26 beabstandet angeordnet. Der Verschlussbereich 22 schließt sich an den Zwischenbereich 24 zum einen Ende der Membrananordnung 2 an. Eine zur Achse 10 orthogonale x-y-Ebene durch eine Achse 28 trennt den Verschlussbereich 22 von dem Zwischenbereich 24. Zum anderen Ende der Membrananordnung 2 hin entlang der Achse 10 befindet sich der Membranbereich 26. Der Zwischenbereich 24 befindet sich zwischen dem Verschlussbereich 22 und dem Membranbereich 26. Eine x-y-Ebene durch eine Achse 30 trennt den Membranbereich 26 von dem Zwischenbereich 24. Der Verschlussbereich 22 und der Zwischenbereich 24 werden gemeinsam auch als Funktionsbereich 32 bezeichnet. Es wird darauf hingewiesen, dass die Ausbildung des Funktionsbereichs 32 unabhängig von der nachfolgend erläuterten Ausgestaltung des Membranbereichs 26 sein kann. Das bedeutet, dass der nachfolgend beschriebene Membranbereich 26 in seinen unterschiedlichen Ausführungen mit unterschiedlichen, nicht weiter erläuterten Funktionsbereichen 32 verbunden sein kann.

Das erste Membranelement 4 umfasst eine im Wesentlichen ohne scharfe Kanten ausgeführte Oberfläche 34. Die Oberfläche 34 ist dazu vorgesehen, dem medienführenden Teil der Ventileinrichtung ausgesetzt zu sein. Das erste Membranelement 4 ist damit derart ausgebildet und/oder angeordnet, um zu einer medienführenden Seite der Membrananordnung 2 in der Ventileinrichtung hin angeordnet zu sein. Das zweite Membranelement 6 ist auf der dem Funktionsbereich 32 abgewandten Seite der Membrananordnung 2 angeordnet. Damit ist das zweite Membranelement 4 derart ausgebildet und/oder angeordnet, um zu einer nicht medienführenden Seite der Membrananordnung in der Ventileinrichtung hin angeordnet zu sein.

Der erste Befestigungsbereich 8 ist dazu ausgebildet, um bezüglich der Ventileinrichtung festgelegt zu werden. Hierzu werden eine Fläche 34 des ersten Membranelements 4 und eine Fläche 36 des zweiten Membranelements 6 jeweils aufeinander zu kraftbeaufschlagt, wodurch zwischen dem ersten Membranelement 4 und dem zweiten Membranelement 6 eine kraft- und/oder formschlüssige Verbindung hergestellt wird. Alternativ oder zusätzlich können das erste Membranelement 4 und das zweite Membranelement 6 in dem ersten Befestigungsbereich 8 über einen Materialschluss, beispielsweise eine Verklebung oder eine Verschweißung, miteinander verbunden werden.

Ein zweiter Befestigungsbereich 40 befindet sich radial innerhalb des ersten Befestigungsbereichs 8. Die nicht gezeigte Antriebsstange weist in einem zum Befestigungsbereich 40 korrespondierenden Abschnitt einen Durchmesser auf, der sowohl zu einer Zylinderinnenfläche 42 des zweiten Membranelements 6 als auch zu einer Zylinderinnenfläche 44 des ersten Membranelements 4 korrespondiert. Des Weiteren weist die Antriebsstange eine Fläche auf, die zu einer Ringfläche 46 des zweiten Membranelements 6 korrespondiert. Bei einer Festlegung der Antriebsstange in der Ausnehmung 14 des ersten Membranelements 4 nimmt die Antriebsstange den Raum innerhalb der Zylinderinnenflächen 42 und 44 ein und die Ringfläche 46 wird mit einer Kraft entgegen der z-Richtung beaufschlagt. Durch den Eingriff des zweiten Membranelements 6 in das erste Membranelement 4 in den Bereichen 48 und 49 wird bei dem Festlegen der Antriebsstange bezüglich dem ersten Membranelement 4 das erste Membranelement 4 und das zweite Membranelement 6 im zweiten Befestigungsbereich 40 zueinander festgelegt. Im vorliegenden Beispiel wird der zweite Befestigungsbereich 40 zumindest mit Formschluss hergestellt. In z-Richtung werden das erste Membranelement 4 und das zweite Membranelement 6 zusätzlich über Kraftschluss zueinander festgelegt, um eine gegenseitige Rotation um die Achse 10 zu vermeiden. Selbstverständlich kann der zweite Befestigungsbereich 40 auch durch einen Materialschluss, beispielsweise durch eine Klebung oder eine Verschweißung ausgeführt sein.

Zwischen dem ersten Befestigungsbereich 8 und dem zweiten Befestigungsbereich 40 befindet sich ein Anlageabschnitt 50. Im Anlageabschnitt 50 liegen das erste Membranelement 4 und das zweite Membranelement 6 mit den jeweiligen zugewandten Oberflächen aneinander an. Unter einem Aneinanderliegen ist entweder ein direkter Materialkontakt oder ein Kontakt zwischen dem ersten Membranelement 4 und dem zweiten Membranelement 6 zu verstehen, bei dem sich zwischen dem ersten Membranelement 4 und dem zweiten Membranelement 6 ein Gleitmittel befinden kann, um eine Bewegung des ersten Membranelements 4 und des zweiten Membranelements 6 gegeneinander, d.h. in entgegengesetzte Richtungen, zu unterstützen.

Das erste und das zweite Membranelement 4, 6 sind derart ausgeformt, dass diese insbesondere im Bereich des Anlageabschnitts 50, insbesondere in einem nicht kraftbeaufschlagten Zustand, im gezeigten Querschnitt jeweils eine Wölbung 52 aufweisen. Die Wölbungen 52 des ersten und zweiten Membranelements 4, 6 sind zueinander im Wesentlichen gleichförmig ausgeführt. Die Wölbungen 52 sind konzentrisch bezüglich der Achse 10. Am Beispiel des zweiten Membranelements 6 sind äußere Seitentangenten 54 und 56 aufgetragen, wobei die äußeren Seitentangenten 54 und 56 zu den jeweiligen Enden der Wölbung 52 hin angeordnet sind. Selbstverständlich können die Seitentangenten 54 und 56 auch durch das Material des jeweiligen Membranelements 4, 6 verlaufen. Die Seitentangenten 54 und 56 werden allgemein auch als äußere Tangenten bezeichnet. Insbesondere in dem nicht kraftbeaufschlagten Zustand schließen die Tangenten 54 und 56 im Querschnitt der Wölbung 52 einen Winkel 58 ein. Der Winkel 58 ist kleiner als 140° im Gradmaß, insbesondere kleiner als 100° im Gradmaß und insbesondere kleiner als 70° im Gradmaß.

Der Anlageabschnitt 50 ist im Wesentlichen torusmantelschnittförmig ausgebildet, wobei der zugehörige Torus um die Mittenachse 10 quer zur Achse 10 geschnitten ist.

Das erste Membranelement 4 und das zweite Membranelement 6 sind aus einem flexiblen Material gefertigt. Insbesondere umfassen das erste Membranelement 4 und das zweite Membranelement 6 Polytetrafluorethylen (PTFE), wodurch sich im Bereich des Anlageabschnitts 50 vorteilhaft eine geringe Reibung ergibt. Darüber können mit PTFE große Ventilhübe ausgeführt werden. Selbstverständlich kann aber auch ein anderes Material als PTFE zum Einsatz kommen. Selbstverständlich können das erste und das zweite Membranelement 4 und 6 auch aus verschiedenen Materialien gefertigt sein.
Damit liegen das erste und das zweite Membranelement 4, 6 in dem Anlageabschnitt 50 derart aneinander an, dass in dem Anlageabschnitt 50 das erste Membranelement 4 und das zweite Membranelement 6 zueinander bewegbar sind. Die vorgenannte Bewegbarkeit bezieht sich insbesondere auf eine Gegeneinanderbewegung von erstem Membranelement 4 und zweitem Membranelement 6 mit einer jeweiligen Bewegungskomponente, die in radialer Richtung entgegengesetzt zueinander sind, oder bei einer Bewegung nur einer der Membranelemente 4 und 6 mit einer Bewegungskomponente in radialer Richtung.

Eine dem Anlagebereich 50 abgewandte Oberfläche 59 des zweiten Membranelements 6 ist auf der dem Funktionsbereich 32 gegenüberliegenden Seite der Membrananordnung 2 angeordnet. Die Oberfläche 59 des zweiten Membranelements ist damit derart ausgebildet und/oder angeordnet, um zu einer nicht medienführenden Seite der Membrananordnung 2 in der Ventileinrichtung hin angeordnet zu sein.

## Patentansprüche

1. Ventileinrichtung zur Absperrung oder Regelung eines Durchflusses von strömenden Fluiden, wobei die Ventileinrichtung eine Antriebsstange und eine Membrananordnung (2) umfasst, wobei die Membrananordnung (2) ein erstes Membranelement (4) und ein zweites Membranelement (6) umfasst, wobei die beiden Membranelemente (4, 6) in einem ersten Befestigungsbereich (8) miteinander verbindbar sind, wobei der erste Befestigungsbereich (8) dazu ausgebildet ist, um bezüglich der Ventileinrichtung festgelegt zu werden, wobei die beiden Membranelemente (4, 6) in einem radial innerhalb des ersten Befestigungsbereichs (8) befindlichen zweiten Befestigungsbereich (40) miteinander verbindbar sind, und wobei das erste Membranelement (4) und das zweite Membranelement (6) in einem Anlageabschnitt (50), der sich zwischen dem ersten Befestigungsbereich (8) und dem zweiten Befestigungsbereich (40) befindet, derart aneinander anliegen, dass in dem Anlageabschnitt (50) das erste Membranelement (4) und das zweite Membranelement (6) zueinander bewegbar sind, wobei die Antriebsstange durch einen Durchgang (12) des zweiten Membranelements (6) geführt ist, und
wobei die Antriebsstange in einer Ausnehmung (14) des ersten Membranelements (4) aufgenommen und festgelegt ist, **dadurch gekennzeichnet, dass** die Antriebsstange in einem zum zweiten Befestigungsbereich (40) korrespondierenden Abschnitt einen Durchmesser aufweist, der sowohl zu einer Zylinderinnenfläche (42) des zweiten Membranelements (6) als auch zu einer Zylinderinnenfläche (44) des ersten Membranelements (4) korrespondiert.

2. Ventileinrichtung (2) nach Anspruch 1, wobei das erste Membranelement (4) und das zweite Membranelement (6) im Bereich des Anlageabschnitts (50), insbesondere in einem nicht kraftbeaufschlagten Zustand, abschnittsweise im Querschnitt jeweils eine Wölbung (52) aufweisen, wobei die Wölbungen (52) des ersten Membranelements (4) und des zweiten Membranelements (6) im Wesentlichen gleichförmig ausgeführt sind.

3. Ventileinrichtung (2) nach Anspruch 2, wobei die Wölbung (52) des ersten Membranelements (4) und des zweiten Membranelements (6) in dem nicht kraftbeaufschlagten Zustand im Querschnitt mit ihren äußeren Tangenten (54, 56) einen Winkel von kleiner als 140° im Gradmaß, insbesondere kleiner als 100° im Gradmaß, und insbesondere kleiner als 70° im Gradmaß einschließt.

4. Ventileinrichtung (2) nach einem der vorstehenden Ansprüche, wobei die beiden Membranelemente (4, 6) in dem ersten Befestigungsbereich (8) und/oder dem zweiten Befestigungsbereich (40) mittels Kraftschluss und/oder mittels Formschluss und/oder mittels Materialschluss, insbesondere mittels einer Klebung oder Verschweißung, zueinander festgelegt sind.

5. Ventileinrichtung (2) nach einem der vorstehenden Ansprüche, wobei das erste Membranelement (4) einen Verschlussbereich (22), der dazu ausgebildet ist, um mit einem Ventilsitzbereich der Ventileinrichtung zusammenzuwirken, umfasst und das erste Membranelement (4) einteilig mit dem Verschlussbereich (22) ausgeführt ist.

6. Ventileinrichtung (2) nach dem Anspruch 5, wobei der Verschlussbereich (22) mittels eines Zwischenbereichs (24) des ersten Membranelements (4) von dem Anlageabschnitt (50), insbesondere entlang einer Bewegungsachse (10) einer Antriebsstange, beabstandet ist.

7. Ventileinrichtung (2) nach einem der vorstehenden Ansprüche, wobei das erste Membranelement (4) derart ausgebildet ist, um in der Ventileinrichtung zu einer medienführenden Seite der Membrananordnung (2) hin angeordnet zu sein, und wobei das zweite Membranelement (6) derart ausgebildet ist, um in der Ventileinrichtung zu einer nicht medienführenden Seite der Membrananordnung (2) hin angeordnet ist.

8. Ventileinrichtung (2) nach einem der vorstehenden Ansprüche, wobei das erste Membranelement (4) und das zweite Membranelement (6) aus einem im Wesentlichen elastischen Material, das insbesondere Polytetraflourethylen (PTFE) umfasst, gefertigt sind.

## Claims

1. Valve device for shutting off or controlling a throughflow of flowing fluids, the valve device comprising an actuating stem and a diaphragm assembly (2), with the diaphragm assembly (2) comprising a first diaphragm element (4) and a second diaphragm element (6), the two diaphragm elements (4, 6) being able to be connected together in a first region for fastening (8), the first region for fastening (8) being adapted to be held fixed in position relative to the valve, the two diaphragm elements (4, 6) being able to be connected together in a second region for fastening (40) which is situated radially inside the first region for fastening (8), and the first diaphragm element (4) and the second diaphragm element (6) resting against one another, in a portion for contact (50) which is situated between the first region for fastening (8) and the second region for fastening (40), in such a way that the first diaphragm element (4) and the second diaphragm element (6) can be moved relative to one another in the portion for contact (50), the actuating stem being guided by a passage (12) through the second diaphragm element (6), and the actuating stem being received and held fixed in an opening (14) in the first diaphragm element (4), **characterised in that**, in a portion which corresponds to the second region for fastening (40), the actuating stem is of a diameter which corresponds both to a cylindrical inner surface (42) of the second diaphragm element (6) and also to a cylindrical inner surface (44) of the first diaphragm element (4).

2. Valve device (2) according to claim 1, wherein, in cross-section, a portion or portions of the first diaphragm element (4) and the second diaphragm element (6) each have, in the region of the portion for contact (50) and particularly in a state where no force is applied, a convexity (52), the convexities (52) of the first diaphragm element (4) and the second diaphragm element (6) being produced to be of substantially the same shape.

3. Valve device (2) according to claim 2, wherein, in cross-section and in the state where no force is applied, the outer tangents (54, 56) to the convexity (52) of the first diaphragm element (4) and the second diaphragm element (6) make an included angle of less than 140°, measured in degrees, and especially of less than 100°, measured in degrees, and in particular of less than 70°, measured in degrees.

4. Valve device (2) according to one of the preceding claims, wherein, in the first region for fastening (8) and/or the second region for fastening (40), the two diaphragm elements (4, 6) are held fixed relative to another by frictional engagement and/or by positive interengagement and/or by adhesion or coalescence and in particular by bonding or welding.

5. Valve device (2) according to one of the preceding claims, wherein the first diaphragm element (4) comprises a closing-off region (22) which is adapted to co-operate with a valve-seat region of the valve device, and the first diaphragm element (4) is produced in one piece with the closing-off region (22).

6. Valve device (2) according to claim 5, wherein the closing-off region (22) is spaced away from the portion for contact (50), in particular along an axis of movement (10) of an actuating stem, by means of an intermediate region (24) of the first diaphragm element (4).

7. Valve device (2) according to one of the preceding claims, wherein the first diaphragm element (4) is adapted to be arranged in the valve device to face towards a medium-carrying side of the diaphragm assembly (2), and wherein the second diaphragm element (6) is adapted to be arranged in the valve device to face towards a non-medium-carrying side of the diaphragm assembly (2).

8. Valve device (2) according to one of the preceding claims, wherein the first diaphragm element (4) and the second diaphragm element (6) are made of a substantially elastic material which comprises in particular polytetrafluoroethylene (PTFE).

## Revendications

1. Dispositif à soupapes pour le blocage ou la régulation d'un débit de fluides en écoulement, le dispositif à soupapes comprenant une tige d'entraînement et un dispositif à membrane (2), le dispositif à membrane (2) comprenant un premier élément de membrane (4) et un deuxième élément de membrane (6), les deux éléments de membranes (4, 6) pouvant être reliés entre eux dans une première zone de fixation (8), la première zone de fixation (8) étant conçue pour être fixe par rapport au dispositif à soupapes, les deux éléments de membranes (4, 6) pouvant être reliés entre eux dans une deuxième zone de fixation (40) se trouvant radialement à l'intérieur de la première zone de fixation (8), et le premier élément de membrane (4) et le deuxième élément de membrane (6) s'appuyant l'un contre l'autre, dans une portion d'appui (50), qui se trouve entre la première zone de fixation (8) et la deuxième zone de fixation (40), de façon à ce que, dans la portion d'appui (50), le premier élément de membrane (4) et le deuxième élément de membrane (6) puissent se déplacer l'un par rapport à l'autre, la tige d'entraînement étant guidée à travers un passage (12) du deuxième élément de membrane (6) et
la tige d'entraînement étant logée et fixée dans une cavité (14) du premier élément de membrane (4), **caractérisé en ce que** la tige d'entraînement présente, dans une portion correspondant à la deuxième zone de fixation (40), un diamètre qui correspond aussi bien à une surface interne cylindrique (42) du deuxième élément de membrane (6) qu'à une surface interne cylindrique (44) du premier élément de membrane (4).

2. Dispositif à soupapes (2) selon la revendication 1, le premier élément de membrane (4) et le deuxième élément de membrane (6) présentant, au niveau de la portion d'appui (50), plus particulièrement dans un état non sollicité par une force, à certains endroits, une section transversale avec une courbure (52), les courbures (52) du premier élément de membrane (4) et du deuxième élément de membrane (6) présentant globalement la même forme.

3. Dispositif à soupapes (2) selon la revendication 2, la courbure (52) du premier élément de membrane (4) et du deuxième élément de membrane (6) formant, dans l'état non sollicité par une force, en section transversale, avec ses tangentes externes (54, 56), un angle inférieur à 140°, plus particulièrement inférieur à 100° et plus particulièrement inférieur à 70°.

4. Dispositif à soupapes (2) selon l'une des revendications précédentes, les deux éléments de membranes (4, 6) étant fixés l'un à l'autre dans la première zone de fixation (8) et/ou la deuxième zone de fixation (40) par force et/ou par complémentarité de forme et/ou par liaison de matière, plus particulièrement au moyen d'un collage ou d'un soudage.

5. Dispositif à soupapes (2) selon l'une des revendications précédentes, le premier élément de membrane (4) comprenant une zone de fermeture (22) qui est conçue pour interagir avec une zone de siège de soupape du dispositif à soupapes, et le premier élément de membrane (4) est conçu d'une seule pièce avec la zone de fermeture (22).

6. Dispositif à soupapes (2) selon la revendication 5, la zone de fermeture (22) étant écartée, au moyen d'une zone intermédiaire (24) du premier élément de membrane (4), de la portion d'appui (50), plus particulièrement le long d'un axe de déplacement (10) d'une tige d'entraînement.

7. Dispositif à soupapes (2) selon l'une des revendications précédentes, le premier élément de membrane (4) étant conçu de façon à être disposé dans le dispositif à soupapes en direction d'un côté conduisant les fluides du dispositif à membranes (2) et le deuxième élément de membrane (6) étant conçu pour être disposé dans le dispositif à soupapes en direction d'un côté ne conduisant pas les fluides du dispositif à membranes (2).

8. Dispositif à soupapes (2) selon l'une des revendications précédentes, le premier élément de membrane (4) et le deuxième élément de membrane (6) étant constitués d'un matériau globalement élastique, qui contient plus particulièrement du polytétrafluoroéthylène (PTFE).
